# EUROPEAN PATENT APPLICATION

(11) **EP 1 901 261 A1**
(43) Date of publication of application: **19.03.2008**
(21) Application number: 05751259.2
(22) Date of filing: 15.06.2005
(51) Int. Cl.: G09F 3/04, G09F 3/10, C09J 7/02, C09J 123/08, H01M 2/02

(54) **ARMOR LABEL FOR BATTERY**

(71) Applicant: Fuji Seal International, Inc., Osaka-shi, Osaka 538-0041 (JP)
(72) Inventor: Umeda, Takako, Fuji Seal, Inc., Osaka-shi Osaka, 5380041 (JP); Kakura, Yoshikazu, Fuji Seal, Inc., Osaka-shi Osaka, 5380041 (JP); Kanemitsu, Hiroki, Fuji Seal, Inc., Osaka-shi Osaka, 5380041 (JP)
(74) Representative: Grünecker, Kinkeldey, Stockmair & Schwanhäusser Anwaltssozietät
(86) International application number: PCT/JP2005/010941
(87) International publication number: WO 2006/134647

(57) **Abstract**

Disclosed is a label 1 for battery packaging, which includes a heat shrinkable film 2, and a printed layer 3 and an adhesive layer 4 each arranged on or above the heat shrinkable film 2. The adhesive layer 4 includes an emulsive heat-sensitive adhesive containing an ethylene polymer and 10 to 30 percent by weight of a tackifier based on the total solid content. The ethylene copolymer has an ethylene content of 66 to 84 percent by weight and a melting point of 60°C to 90°C. The heat shrinkable film 2 is preferably a film having a percentage of heat shrinkage in a main stretching direction of 10% or more after being immersed in a glycerol bath at 100°C for five seconds. The label 1 for battery packaging excels in low-temperature tack and blocking resistance and is less likely to deteriorate with time.

## Description

### Technical Field

The present invention relates to labels for battery packaging, which are attached as packaging materials to batteries such as alkaline dry batteries.

### Background Art

Tack labels have been frequently used as packaging materials for dry batteries. These labels, however, require release papers for protecting their pressure-sensitive adhesive layers until the labels are attached to batteries. These release papers are expensive. In addition, they have large thicknesses. Accordingly, the number of labels per one roll to be set to a labeler is limited, working efficiency is thereby lowered. Furthermore, the release papers become industrial wastes after use. There have therefore been proposed heat-sensitive labels each including a heat-sensitive adhesive resin applied through extrusion lamination (melt extrusion coating), as packaging materials for dry batteries which do not require such a release paper (e.g., Japanese Patent No. 3273115).

The known heat-sensitive labels for battery packaging require an extra extrusion lamination step in addition to a printing step, and it is difficult to reduce cost for the labels. Delayed-tack heat-sensitive labels have been known as heat-sensitive labels that can be prepared according to a process as with printing. However, they often contain substances suspected of being endocrine disrupters in order to be activated at low temperatures. In addition, although being transparent immediately after affixation, they become opaque and show decreased strength several days after the affixation, because delayed tack adhesives crystallize. Thus, they markedly deteriorate with time and are unsuitable as packaging materials for dry batteries.

[Patent Document 1] Japanese Patent No. 3273115

### Disclosure of Invention

### Problems to be Solved by the Invention

An object of the present invention is to provide a label for battery packaging, which excels in low-temperature tack and blocking resistance and is less likely to deteriorate with time.
Another object of the present invention is to provide a label for battery packaging, which has the above properties and, in addition, can be prepared inexpensively through a small number of steps.

### Means for Solving the Problems

After intensive investigations to achieve the objects, the present inventors have found that a label for battery packaging, which has excellent adhesive properties and is less likely to deteriorate with time, can be obtained inexpensively by using an emulsive heat-sensitive adhesive having a specific structure. The present invention has been made based on these findings.

Specifically, according to the present invention, there is provided a label for battery packaging, which includes a heat shrinkable film, and an adhesive layer and a printed layer each arranged on or above the heat shrinkable film. The adhesive layer includes an emulsive heat-sensitive adhesive containing an ethylene copolymer and 10 to 30 percent by weight of a tackifier based on the total solid content of the emulsive heat-sensitive adhesive. The ethylene copolymer has an ethylene content of 66 to 84 percent by weight and a melting point of 60°C to 90°C.

The heat shrinkable film is preferably a film having a percentage of heat shrinkage in a main stretching direction of 10% or more as determined after being immersed in a glycerol bath at 110°C for five seconds. The heat shrinkable film is also preferably such a film as to have a percentage of heat shrinkage in a main stretching direction of 10% or less as determined after being immersed in a glycerol bath at 90°C for five seconds and to have a percentage of heat shrinkage in a main stretching direction of 30% or more as determined after being immersed in a glycerol bath at 140°C for five seconds.

The adhesive layer preferably has an activation temperature lower than the shrinkage starting temperature of the heat shrinkable film by 10°C or more. The ethylene copolymer is preferably an ethylene-vinyl acetate copolymer having a melt flow rate (MFR) of 150 to 450 g/10 minutes. Advantages

A label for battery packaging according to the present invention can be firmly affixed to a metallic portion of a dry battery and an overlapped portion of the label itself at low temperatures and can be stably affixed thereto over a long period of time after affixation. The label is not sticky at ordinary temperature, excels in blocking resistance, and can be stored over a long period of time. In addition, the label can be produced inexpensively, because its adhesive layer can be prepared through a step as with printing.

### Brief Description of the Drawings

[Fig. 1] Fig. 1 is a schematic cross-sectional view showing an embodiment of a label for battery packaging according to the present invention.
[Fig. 2] Fig. 2 is a partial cross-sectional view showing how a label for battery packaging according to the present invention is wrapped around a battery.
[Fig. 3] Fig. 3 is a partial cross-sectional view taken along line A-A in Fig. 2.
[Fig. 4] Fig. 4 is a partial cross-sectional view showing how a label for battery packaging according to the present invention is affixed to a battery.

### Reference Numerals

- 1: label
- 2: heat shrinkable film (label substrate)
- 3: printed layer
- 4: adhesive layer
- 5: battery
- 5a: upper end face of battery
- 5b: lower end face of battery

### Best Mode for Carrying Out the Invention

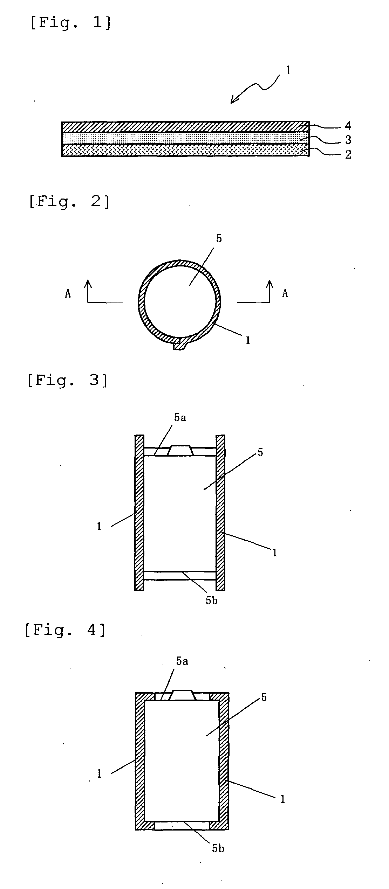

Embodiments of the present invention will be illustrated below with reference to the attached drawings. Fig. 1 is a schematic cross-sectional view showing an embodiment of a label for battery packaging according to the present invention. A label 1 for battery packaging includes a label substrate 2, and a printed layer 3 and an adhesive layer 4 arranged on one side of the label substrate 2 in this order.

The label substrate 2 is composed of a heat shrinkable film. Materials for the heat shrinkable film can be those commonly used. Examples thereof include polyester resins such as poly(ethylene terephthalate)s (PET), poly(butylene terephthalate)s (PBT), and poly(ethylene naphthalate)s (PEN); polyolefinic resins such as polyethylenes and polypropylenes; polystyrenic resins such as polystyrenes; and poly(vinyl chloride) resins and poly(vinylidene chloride) resins. Each of these materials can be used alone or in combination. Among them, the film is preferably a film composed of a polyester resin, a polystyrene resin, and/or a poly(vinyl chloride) resin, and is more preferably a film composed of a polyester resin. The label substrate 2 may include a single layer or a laminate of two or more layers.

The thickness of the label substrate 2 can be selected as appropriate within ranges not adversely affecting, for example, mechanical strength and handleability of the label and is generally about 20 to about 100 µm and preferably about 25 to about 60 µm.

The heat shrinkable film is preferably a film which has been subjected to a uniaxial stretching treatment. The stretching treatment may be carried out by stretching the film in one direction (this direction is hereinafter referred to as "main stretching direction") to about 2.0 to about 6.0 times, and preferably about 3.5 to about 5.5 times at a temperature of, for example, about 70°C to 100°C typically using a system such as a tenter system or a tube system. The stretching is preferably carried out in a machine direction (longitudinal direction). The film may be stretched mainly in only one direction. It may be further stretched in another direction (cross direction) to about 1.01 to about 1.1 times. The thus-obtained label substrate 2 shows orientation in a direction of stretching and highly thermally shrinkable in this direction. This label substrate 2 (heat shrinkable film) has a percentage of heat shrinkage in the main stretching direction of preferably about 10% or more, for example, about 10% to about 30%, and more preferably about 10% to about 20% after immersing in a glycerol bath at 110°C for five seconds. If the percentage of heat shrinkage is less than 10%, and when the label is wrapped around a battery so as to thermally shrink in a circumferential direction of the battery, it may be difficult to allow upper and lower ends of the label to be in close contact with upper and lower end faces of the dry battery through heat shrinkage. To inhibit shrinkage upon activation of the adhesive layer, the percentage of heat shrinkage of the label substrate 2 is preferably 10% or less at 90°C (for five seconds, in a glycerol bath) and is preferably 30% or more (for example, about 30% to about 60%) at 140°C (for five seconds, in a glycerol bath). In this connection, a percentage of heat shrinkage in a direction perpendicular to the main stretching direction is generally about -3% to about 10% at 110°C (for five seconds, in a glycerol bath). These percentages of heat shrinkage can be adjusted by appropriately selecting parameters such as material and thickness of the label substrate, temperature and time period of stretching, percent of stretch (draw ratio), and temperature and time period of setting after stretching.

The printed layer 3 is a layer on which, for example, a trade name, an illustration, and/or handling precautions are printed and indicated through printing according to a known printing process such as rotary letterpress, silk screen printing, flexographic printing, or gravure printing. Gravure printing and flexographic printing are preferably used in the present invention, because the printed layer 3 and the adhesive layer 4 can be formed in one step, the printing speed is high, and the label can be more efficiently produced. A printing ink for use in the formation of the printed layer 3 is preferably an ink whose thermal stability is adjusted so as to avoid damage of the layer due to heat applied upon activation of the adhesive layer 4. The printed layer may have a smaller thickness in upper and lower ends of the label which will be in close contact with the upper and lower end faces of the dry battery through heat shrinkage. This may avoid inhibition of heat shrinkage.

A primer coating layer may be arranged between the printed layer 3 and the label substrate 2 so that the printed layer 3 can adhere to the label substrate 2 more satisfactorily. The primer coating layer can be formed from a known primer. Examples of such known primers include polyester primers and isocyanate primers including two-pack primers or the like. The thickness of the primer coating layer can be selected appropriately within ranges not adversely affecting, for example, transparency and handleability of the label and is, for example, about 0.3 to about 1.5 µm. Where necessary, a deposited layer and/or an anchor coat layer may be arranged between the printed layer 3 and the pressure-sensitive adhesive layer 4. In addition or alternatively, another film may be laminated through dry lamination or extrusion lamination typically in some uses of the label.

A label may have a label substrate having an adhesive layer on one side of the substrate and a printed layer on the other side of the substrate. The label of this type can be prepared by, for example, carrying out printing on one side of the label substrate, turning the label substrate upside down, and forming an adhesive layer on the other side of the label substrate by printing. In this case, an overcoat layer (topcoat layer) may be arranged on the printed layer. The overcoat layer is a layer acting to protect the printed layer and/or to give a good shine. This layer can be formed, for example, through coating or printing of a transparent ultraviolet-curable varnish, a polyester resin, an acrylic resin, an epoxy resin, or a silicone resin combined with a lubricant, etc., according to necessity. The overcoat layer has a thickness of, for example, about 0.5 to about 2 µm. Also in this case, a primer coating layer may be arranged between the printed layer and the label substrate, and a deposited layer and/or an anchor coat layer may be arranged between the label substrate and the pressure-sensitive adhesive layer. Another film may be laminated through dry lamination or extrusion lamination typically in some uses of the label.

Examples of a preferred layer structure of a label for battery packaging according to the present invention include (i) label substrate/(primer coating layer)/printed layer/(deposited layer)/(anchor coat layer)/pressure-sensitive adhesive layer, and (ii) (overcoat layer)/printed layer/(primer coating layer)/label substrate/(deposited layer)/(anchor coat layer)/pressure-sensitive adhesive layer. The layers indicated within the parenthesis are layers which may be arranged according to necessity.

The adhesive layer 4 contains an emulsive heat-sensitive adhesive. The emulsive heat-sensitive adhesive is such an adhesive that, when the adhesive is applied and dried to form an adhesive layer, the adhesive layer does not show tackiness at ordinary temperature but develops tackiness through heating. The emulsive heat-sensitive adhesive contains at least an ethylene copolymer and a tackifier as constituents. The adhesive layer 4 may further contain any other components. For example, it may further contain an olefinic rubber for improving followingness to the film, lowering the melting point, and improving initial tack, and/or it may contain a lubricant or wax, etc., for improving suitability for labeler (labeler suitability) and blocking resistance. The adhesive layer 4 does not substantially contain a solid plasticizer. For example, when the layer contains the solid plasticizer, the content of the solid plasticizer is preferably 5 percent by weight or less, and particularly preferably 1 percent by weight or less. In the present invention, the adhesive layer includes an emulsive heat-sensitive adhesive herein, the label thereby does not require release paper and does not require, as constituents, substances that are suspected of being endocrine disrupters.

Examples of the ethylene copolymer include ethylene-vinyl acetate copolymers (EVA); ethylene-acrylic acid copolymers (EAA); ethylene-methacrylic acid copolymers (EMAA); ethylene-acrylate copolymers such as ethylene-ethyl acrylate copolymers (EEA); and ethylene-methacrylate copolymers such as ethylene-methyl methacrylate copolymers (EMMA). Among them, ethylene-vinyl acetate-based copolymers such as ethylene-vinyl acetate copolymers (EVA) are preferably used. Each of these can be used alone or in combination. The melt flow rate (MFR; according to Japanese Industrial Standards (JIS) K 7210) is preferably within a range of 150 to 450 g/10 minutes.

The tackifier acts to improve adhesiveness. Examples of such tackifiers include rosin resins such as rosin, polymerized rosins, hydrogenated rosins, and derivatives of them, and resin acid dimers; terpene resins such as terpene resins, aromatic modified terpene resins, hydrogenated terpene resins, and terpene-phenol resins; petroleum resins such as aliphatic, aromatic, and alicyclic petroleum resins; coumarone-indene resins; styrenic resins; and phenolic resins. Among them, rosin resins and terpene resins are preferred, of which terpene resins such as hydrogenated terpene resins are typically preferred. Each of these tackifiers can be used alone or in combination.

The temperature at which the adhesive layer 4 develops adhesiveness (activation temperature) is preferably higher than the shrinkage starting temperature of a heat shrinkable film constituting the label substrate 2 by 10°C or more, and typically preferably 15°C or more. The shrinkage starting temperature herein is a temperature at which the heat shrinkable film shrinks 1% or more. In a label of this type, the label substrate 2 does not shrink before affixation even when the adhesive layer 4 is sufficiently heated for activation to develop satisfactory adhesiveness before affixation. The label can thereby be reliably attached to a battery while keeping good appearance.

An adhesive layer for use in the present invention includes an emulsive heat-sensitive adhesive containing an ethylene copolymer and 10 to 30 percent by weight of a tackifier based on the total solid content of the emulsive heat-sensitive adhesive, in which the ethylene copolymer has an ethylene content of 66 to 84 percent by weight and a melting point of 60°C to 90°C. An adhesive layer of this type can exhibit excellent low-temperature tack and blocking resistance.

The low-temperature tack refers to a capability of developing adhesiveness through heating at low temperatures. The low-temperature tack can be evaluated in terms of adhesive strength as determined in the following manner. Specifically, samples are prepared by heating labels to 80°C for activation and affixing the activated labels to a metal sheet and a plastic sheet, respectively; the samples are subjected to tests according to JIS K 6854-1 (90-degree peel) and JIS K 6854-3 (T peel) at a peel rate of 200 mm/min.; and adhesive strengths of the samples are measured with respect to the metal (simulating surface of a dry battery) and the plastic (simulating a label substrate). The adhesive strength of the adhesive layer 4 as determined by the above method is, for example, 3 N/15 mm or more with respect to both the metal and plastic. If the adhesive strength is less than 3 N/15 mm, affixation failure may occur; for example, when the label 1 is wrapped around a battery, it is difficult to affix an overlap of the label 1 at a wrapping termination of the label 1, or it is difficult for the label 1 to come into close contact with the dry battery. The low-temperature tack can be controlled by adjusting the ethylene content and melting point of the ethylene polymer, and the type and content of the tackifier.

The blocking resistance can be evaluated, for example, in terms of an adhesive strength with respect to a plastic, in which the adhesive strength is determined on a sample through a test according to JIS K 6854-3 (T peel) at a peeling rate of 200 mm/min. The sample herein is composed of a label laminated on a plastic sheet so that the adhesive layer faces the plastic sheet and has been stored in an atmosphere of 40°C under a load (pressure) of, for example, about 2 kg/cm² (196 kPa) for twenty-four hours. The adhesive strength of the adhesive layer 4 as determined by this method is, for example, less than 0.1 N/15 mm. If the adhesive strength is 0.1 N/15 mm or more, the label may be unsuitable for use in a labeler upon labeling and poor in blocking resistance, and the label may thereby often develop tackiness when the label is wound or stacked. The blocking resistance can be controlled mainly by adjusting the melting point of the ethylene copolymer, and the type and content of the tackifier.

If the ethylene content of the ethylene copolymer is less than 66 percent by weight or more than 84 percent by weight, the low-temperature tack may markedly decrease. The ethylene content is preferably about 67 to about 81 percent by weight. If the melting point of the ethylene copolymer is lower than 60°C, the blocking resistance may be poor. If the melting point exceeds 90°C, the adhesive layer 4 may have an increasing activation temperature, whereby the heat shrinkable film (label substrate 2) may shrink when the label is activated through heating; and the label may often suffer from wrinkle and warp when it is wrapped and attached to a battery, and damage of the printed layer may likely to occur. The melting point is preferably about 70°C to about 85°C. The melting point herein is measured through differential scanning calorimetry (DSC).

If the content of the tackifier is less than 10 percent by weight or more than 30 percent by weight based on the total solid content, the low-temperature tack may be poor and it may be difficult to exhibit sufficient adhesiveness. The content of the tackifier is preferably about 10 to about 25 percent by weight based on the total solid content.

In addition, the adhesive layer for use in the present invention excels in stability with time. The stability with time can be evaluated, for example, in terms of decreasing rate of adhesiveness of a label as determined in the following manner. Specifically, the label is affixed to an adherend and stored at ordinary temperature for a predetermined period of time, and the decreasing rate of adhesiveness after the storage is determined with respect to the adhesiveness of the label immediately after affixation. The decreasing rate of adhesiveness of the adhesive layer 4 after one month is, for example, less than 50%. A label of this type can maintain its adhesiveness over a long period of time. If the decreasing rate of adhesiveness is 50% or more, the resulting label may be likely to peel during storage after affixation and is not suitable particularly as a label for battery packaging also from the viewpoint of safety.

The emulsive heat-sensitive adhesive may further contain additives such as an emulsifier, a wax, a stabilizer, and/or a modifier according to necessity.

The emulsive heat-sensitive adhesive is used after dispersing the ethylene copolymer, tackifier and any other components in water or a solvent in a common manner. An emulsive heat-sensitive adhesive as dispersed in water (water-based emulsive heat-sensitive adhesive) can be prepared, for example, by subjecting monomer(s) including ethylene corresponding to the ethylene polymer to emulsion polymerization. An emulsive heat-sensitive adhesive as dispersed in a solvent (solvent-based emulsive heat-sensitive adhesive) can be prepared, for example, by dispersing the components in a solvent having low solubility with respect to the components (poor solvent). Examples of such poor solvents are aliphatic hydrocarbon solvents such as n-hexane and n-heptane. Among them, water-based emulsive heat-sensitive adhesives are preferably used, because they place small loads on the environment.

The adhesive layer 4 can be formed according to a known printing procedure such as rotary letterpress, flexographic printing, or gravure printing. Among them, gravure printing and flexographic printing are preferred, because the layer can be formed at a high printing rate, and the printed layer 3 and the adhesive layer 4 can be formed in one step. An emulsive heat-sensitive adhesive having the above configuration may be subjected to printing as intact or after adding, for example, methanol or isopropyl alcohol for accelerating drying of a printed layer after printing. As is described above, use of an emulsive heat-sensitive adhesive is economically advantageous, because the emulsive heat-sensitive adhesive can be easily applied to a heat shrinkable film in a step as with printing, whereby no extra step such as melt-extrusion coating is required. The adhesive layer may be arranged on the entire surface of the label, or it may also be arranged only both right and left edges in a longitudinal direction of the label (leading and trailing edges of the label when the label is wrapped around the circumferential side of a battery) or may be arranged in stripes extending in a machine direction and positioning at predetermined intervals in a circumferential direction.

A label according to the present invention excels in labeler suitability (is suitably used in a labeler), because an emulsive heat-sensitive adhesive is used as an adhesive constituting the adhesive layer 4. Specifically, such an emulsive heat-sensitive adhesive is a dispersion in which polymer components (solid contents) are dispersed as particles in a liquid, whereby, when the adhesive is applied, the applied surface has fine protrusions and depressions due to the particles to thereby inhibit blocking. Thus, the label can be more efficiently transported within a labeler. The labeler suitability may be evaluated in terms of static coefficient of friction on a surface of the label and the adhesive layer 4 as determined by a test according to JIS K 7125. The static coefficient of friction on a surface of the label and the adhesive layer 4 is, for example, less than 0.5. If the static coefficient of friction is 0.5 or more, the labeler suitability may tend to decrease, because the label surface and the adhesive layer surface are less likely to slip.

The thickness of the adhesive layer 4 can be selected as appropriate in consideration typically of adhesiveness, appearance, and cost, and is, for example, about 0.1 to about 15 µm, preferably about 1 to about 8 µm. If the thickness of the adhesive layer is excessively large, cohesive failure may occur, thereby required adhesive strength may not be obtained. In contrast, if it is excessively small, it may be difficult to obtain sufficient tackiness.

The percentage of heat shrinkage of the entire label is substantially equal to the percentage of heat shrinkage of the label substrate. The percentage of heat shrinkage of the label substrate in the main stretching direction is, for example, 10% or more after being immersed in a glycerol bath at 110°C for five seconds.

Labels for battery packaging according to the present invention are not limited to the embodiment shown in Fig. 1 and may be another embodiment in which a printed layer is arranged on one side of a label substrate, and an adhesive layer is arranged on the other side.

Labels for battery packaging according to the present invention include an adhesive layer composed of an emulsive heat-sensitive adhesive having a specific composition, whereby excel in low-temperature tack, blocking resistance, and labeler suitability and can stably keep their adhesiveness over a long period of time. The labels for battery packaging in the present invention are therefore useful as packaging labels for batteries including alkaline dry batteries; primary batteries such as lithium batteries and manganese batteries; and secondary batteries such as nickel metal hydride batteries and lithium-ion batteries. They are useful particularly as packaging labels for cylindrical batteries.

Next, how a label for battery packaging according to the present invention is attached to a battery will be explained. When a label 1 including an adhesive layer 4 composed of a heat-sensitive adhesive is attached to a battery 5, initially, a long film having the same layer structure as with the label 1 is cut typically with a cutter blade to yield a label 10 for battery packaging having a desired length, the label 1 is then heated, for example, on a heating drum at 120°C for 0.1 second to activate the adhesive layer 4, and this is wrapped around a circumferential side of the battery 5 as illustrated in Figs. 2 and 3. In this procedure, the label 1 is wrapped so that a main stretching direction X (for example, machine direction) of the label substrate 2 constituting the label 1 lies in the circumferential direction of the battery 5. At this time, the activated adhesive layer 4 of the label 1 comes in contact with the surface of the battery 5, whereby the label 1 adheres to the circumferential side of the battery 5 by the action of the adhesive of the adhesive layer 4. At the wrapping trailing edge of the label 1, the label 1 overlaps and adheres to itself.

Next, the battery 5 wrapped in the label 1 is supplied to a heating device heated to a temperature at which the label substrate 2 undergoes heat shrinkage (for example, treating with hot air at 170°C for 0.1 second). Thus the label 1 thermally shrink, and upper and lower ends of the label 1 protruding from the both ends of the battery adhere to the upper and lower end faces 5a and 5b of the battery, whereby the entire label 1 comes in close contact with the battery 5, as shown in Fig. 4. In this procedure, the battery 5 may be tumbled while heating and pressing the outer circumferential side of the battery 5 typically with a heating belt. Thus, the adhesive layer 4 is reactivated, whereby the label 1 further firmly adheres to the outer circumferential side of the battery 5, and the wrapping leading and trailing edges of the label 1 as overlap also firmly adhere to each other. This yields a battery bearing the label 1 which is firmly affixed.

A series of these steps can be conducted using a known labeling machine (labeler) such as one described in Japanese Unexamined Patent Application Publication (JP-A) No. H09-39929 or Japanese Unexamined Patent Application Publication (JP-A) No. H10-254364.

### EXAMPLES

The present invention will be illustrated in further detail with reference to several examples below, which are, however, by no means construed to limit the scope of the present invention. The heat shrinkage starting temperature of a heat shrinkable film is defined as a temperature at which the film shrinks 1% or more after being immersed in a glycerol bath at a predetermined temperature for five seconds. The activation temperature of a heat-sensitive adhesive is defined as such a temperature (lowest temperature) that an adhesive strength as determined in the following manner is 0.1 N/15 mm or more. Specifically, a label is affixed to a poly(ethylene terephthalate) (PET) sheet [produced by Toyobo Co., Ltd. under the trade name of "A1101", 100 µm (untreated surface)] at a predetermined temperature and a pressure of 0.1 MPa for a time period of 1 second so as to yield an adhesion area of 15 mm long and 10 mm wide, the resulting sample is subjected to a T-peel test at a peeling rate of 200 mm/min by a process according to JIS K 6854-3, and the adhesive strength of the sample is measured.

### EXAMPLE 1

A heat shrinkable polyester film (thickness: 50 µm; heat shrinkage starting temperature: 90°C) was used as a heat shrinkable film. This heat shrinkable film has a percentage of heat shrinkage in the machine direction of 17% after being immersed in a glycerol bath at 110°C for five seconds, of 35% after being immersed in a glycerol bath at 140°C for five seconds, and of 1.4% after being immersed in a glycerol bath at 90°C for five seconds. The heat shrinkable film has a percentage of heat shrinkage in a transverse direction (cross direction) of 2% after being immersed in a glycerol bath at 110°C for five seconds. The heat shrinkable film was subjected to gravure printing of various kinds of indication designs on one side thereof to form a printed layer of 2 µm thick thereon, and an emulsive heat-sensitive adhesive (activation temperature: about 65°C) was applied onto the printed layer through gravure printing to form an adhesive layer 2 µm thick thereon. The emulsive heat-sensitive adhesive was composed of 88 percent by weight of an ethylene-vinyl acetate copolymer (EVA; ethylene content: 72 percent by weight, melting point: 62°C, MFR: 400 g/10 minutes) and 12 percent by weight of a tackifier (terpene resin (produced by Yasuhara Chemical Co., Ltd. under the trade name of "YS Polyster T115").

### EXAMPLE 2

A label was prepared by the procedure of Example 1, except for using, as the emulsive heat-sensitive adhesive, an emulsive heat-sensitive adhesive (activation temperature: about 65°C) containing 80 percent by weight of an ethylene-vinyl acetate copolymer having an ethylene content of 72 percent by weight (melting point: 63°C, MFR: 280 g/10 minutes) and 20 percent by weight of the same tackifier as in Example 1.

### EXAMPLE 3

A label was prepared by the procedure of Example 1, except for using, as the emulsive heat-sensitive adhesive, an emulsive heat-sensitive adhesive (activation temperature: about 65°C) containing 80 percent by weight of the same ethylene-vinyl acetate copolymer as in Example 1 and 20 percent by weight of the same tackifier as in Example 1.

### EXAMPLE 4

A label was prepared by the procedure of Example 1, except for using, as the emulsive heat-sensitive adhesive, an emulsive heat-sensitive adhesive (activation temperature: about 65°C) containing 76 percent by weight of the same ethylene-vinyl acetate copolymer as in Example 1 and 24 percent by weight of the same tackifier as in Example 1.

### EXAMPLE 5

A label was prepared by the procedure of Example 1, except for using, as the emulsive heat-sensitive adhesive, an emulsive heat-sensitive adhesive (activation temperature: about 65°C) containing 90 percent by weight of an ethylene-vinyl acetate copolymer having an ethylene content of 67 percent by weight (melting point: 61°C, MFR: 400 g/10 minutes) instead of the ethylene-vinyl acetate copolymer having an ethylene content of 72 percent by weight; and 10 percent by weight of the same tackifier as in Example 1.

### EXAMPLE 6

A label was prepared by the procedure of Example 1, except for using, as the emulsive heat-sensitive adhesive, an emulsive heat-sensitive adhesive (activation temperature: about 80°C) containing 75 percent by weight of an ethylene-vinyl acetate copolymer having an ethylene content of 81 percent by weight (melting point: 75°C, MFR: 400 g/10 minutes) instead of the ethylene-vinyl acetate copolymer having an ethylene content of 72 percent by weight; and 25 percent by weight of the same tackifier as in Example 1.

### COMPARATIVE EXAMPLE 1

A label was prepared by the procedure of Example 1, except for using, instead of the emulsive heat-sensitive adhesive, a delayed-tack adhesive (produced by Toyo Ink Mfg. Co., Ltd. under the trade name of "TOYO DW 4070").

### COMPARATIVE EXAMPLE 2

A label was prepared by the procedure of Example 1, except for using, instead of the emulsive heat-sensitive adhesive, a hot-melt adhesive mainly containing an ethylene-vinyl acetate copolymer (produced by Hitachi Kasei Polymer Co., Ltd. under the trade name of "Hibon HX-118") and applying the hot melt adhesive onto a heat shrinkable film through melt coating.

### COMPARATIVE EXAMPLE 3

A label was prepared by the procedure of Example 1, except for using, instead of the emulsive heat-sensitive adhesive, a hot melt resin (thermofusible resin) mainly containing an ethylene-vinyl acetate copolymer and for applying the resin onto a heat shrinkable film through melt extrusion.

### COMPARATIVE EXAMPLE 4

A label was prepared by the procedure of Example 1, except for using, instead of the emulsive heat-sensitive adhesive, a solvent-based ethylene-vinyl acetate pressure-sensitive adhesive (produced by Chuo Rika Kogyo Co., Ltd. under the trade name of "Aquatex EC 1200").

### COMPARATIVE EXAMPLE 5

A label was prepared by the procedure of Example 1, except for using, as the emulsive heat-sensitive adhesive, an emulsive heat-sensitive adhesive (activation temperature: about 60°C) containing an ethylene-vinyl acetate copolymer having an ethylene content of 65 percent by weight (melting point: 58°C, MFR: 400 g/10 minutes) instead of the ethylene-vinyl acetate copolymer having an ethylene content of 72 percent by weight.

### COMPARATIVE EXAMPLE 6

A label was prepared by the procedure of Example 1, except for using an emulsive heat-sensitive adhesive (activation temperature: about 75°C) containing no tackifier but containing 100 percent by weight of an ethylene-vinyl acetate copolymer having an ethylene content of 72 percent by weight (melting point: 70°C, MFR: 30 g/10 minutes).

### COMPARATIVE EXAMPLE 7

A label was prepared by the procedure of Example 1, except for using an emulsive heat-sensitive adhesive (activation temperature: about 70°C) containing no tackifier but containing 100 percent by weight of an ethylene-vinyl acetate copolymer having an ethylene content of 72 percent by weight (melting point: 65°C, MFR: 150 g/10 minutes).

### COMPARATIVE EXAMPLE 8

A label was prepared by the procedure of Example 1, except for using an emulsive heat-sensitive adhesive (activation temperature: about 65°C) containing no tackifier but containing 100 percent by weight of the same ethylene-vinyl acetate copolymer (melting point: 62°C, MFR: 400 g/10 minutes) as in Example 1.

### COMPARATIVE EXAMPLE 9

A label was prepared by the procedure of Example 1, except for using, as the emulsive heat-sensitive adhesive, an emulsive heat-sensitive adhesive (activation temperature: about 65°C) containing 64 percent by weight of the same ethylene-vinyl acetate copolymer as in Example 1 and 36 percent by weight of the same tackifier as in Example 1.

### COMPARATIVE EXAMPLE 10

A label was prepared by the procedure of Example 1, except for using, as the emulsive heat-sensitive adhesive, an emulsive heat-sensitive adhesive (activation temperature: about 65°C) containing 58 percent by weight of the same ethylene-vinyl acetate copolymer as in Example 1 and 42 percent by weight of the same tackifier as in Example 1.

### COMPARATIVE EXAMPLE 11

A label was prepared by the procedure of Example 1, except for using, as the emulsive heat-sensitive adhesive, an emulsive heat-sensitive adhesive (activation temperature: about 65°C) containing 94 percent by weight of the same ethylene-vinyl acetate copolymer as in Example 1 and 6 percent by weight of the same tackifier as in Example 1.

### COMPARATIVE EXAMPLE 12

A label was prepared by the procedure of Example 1, except for using, as the emulsive heat-sensitive adhesive, an emulsive heat-sensitive adhesive (activation temperature: about 75°C) containing 88 percent by weight of an ethylene-vinyl acetate copolymer having an ethylene content of 85 percent by weight (melting point: 70°C, MFR: 400 g/10 minutes) instead of the ethylene-vinyl acetate copolymer having an ethylene content of 72 percent by weight.

### EXAMPLE 7

A label was prepared by the procedure of Example 1, except for using, as the emulsive heat-sensitive adhesive, an emulsive heat-sensitive adhesive (activation temperature: about 75°C) containing 90 percent by weight of an ethylene-ethyl acrylate copolymer having an ethylene content of 75 percent by weight (EEA; melting point: 68°C, MFR: 275 g/10 minutes) instead of the ethylene-vinyl acetate copolymer having an ethylene content of 72 percent by weight; and 10 percent by weight of the same tackifier as in Example 1.

### COMPARATIVE EXAMPLE 13

A label was prepared by the procedure of Example 1, except for using, as the emulsive heat-sensitive adhesive, an emulsive heat-sensitive adhesive (activation temperature: about 75°C) containing no tackifier but containing 100 percent by weight of an ethylene-ethyl acrylate copolymer having an ethylene content of 75 percent by weight (melting point: 68°C, MFR: 275 g/10 minutes).

### Evaluation Tests

### Low-Temperature Tack

Samples were prepared by allowing the labels prepared according to Examples and Comparative Examples to adhere each to a poly(ethylene terephthalate) (PET) sheet [produced by Toyobo Co., Ltd. under the trade name of "A1101", 100 µm (untreated surface)] using a hot plate at a temperature of 80°C and a pressure of 0.1 MPa for a time period of one second with an adhesion area of 15 mm long and 10 mm wide. The resulting samples were subjected to T-peel tests at a peeling rate of 200 mm/min by a process according to JIS K 6854-3, and adhesive strengths (N/15 mm) of the samples were measured. In addition, the labels were allowed to adhere to a SUS 304 stainless steel sheet in the same manner as that one mentioned above, subjected to 90-degree peel tests at a peeling rate of 200 mm/min by a process according to JIS K 6854-1, and adhesive strengths (N/15 mm) of the samples were measured. For the labels prepared according to Examples 1 and 2 and Comparative Examples 1 to 4, one having the adhesive strength to the PET sheet of 3 N/15 mm or more was evaluated as "O", and one having the adhesive strength to the PET sheet of less than 3 N/15 mm was evaluated as "×". These results are shown in Table 1. Similar evaluations were obtained on the adhesive strength with respect to the stainless steel sheet. For the labels according to Examples 1 to 7 and Comparative Examples 5 to 13, the adhesive strengths (N/15 mm) to the PET sheet are shown in upper parts and the evaluations are shown in lower parts in "Low-temperature tack" in Table 2. Similar evaluations were obtained on the adhesive strength with respect to the stainless steel sheet.

### Blocking Resistance

The labels prepared according to Examples and Comparative Examples were overlaid each on a PET sheet [produced by Toyobo Co., Ltd. under the trade name of "A1101", 100 µm (untreated surface)] so that their adhesive layers faced the PET sheet, stored under a load of 2 kg/cm² (196 kPa) at 40°C for twenty-four hours, subjected to T-peel tests at a peeling rate of 200 mm/min by a process according to JIS K 6854-3, and adhesive strengths (N/15 mm) of the labels were measured. One having the dhesive strength thus measured of less than 0.1 N/15 mm was evaluated as "O", one having the ahesive strength of 0.1 to 0.2 N/15 mm was evaluated as "Δ", and one having the adhesive strength of more than 0.2 N/15 mm was evaluated as "×". The results of Examples 1 and 2 and Comparative Examples 1 to 4 are shown in Table 1, and the results of Examples 1 to 7 and Comparative Examples 5 to 13 are shown in Table 2.

### Stability with Time

Samples were prepared by allowing the labels prepared according to Examples 1 and 2 and Comparative Examples 1 to 4 to adhere each to a poly(ethylene terephthalate) (PET) sheet using a hot plate at a temperature of 80°C and a pressure of 0.1 MPa for a time period of one second with an adhesion area of 15 mm long and 10 mm wide. The resulting samples (before storage) and samples after storage at ordinary temperature for one month (after storage) were subjected to T-peel tests at a peeling rate of 200 mm/min by a process according to JIS K 6854-3, and adhesive strengths (N/15 mm) of these samples were measured. One having a decreasing rate of the adhesive strength of after storage to that before storage of less than 20% was evaluated as "O", and one having a decreasing rate of 20% or more was evaluated as "×" in stability with time. These results are shown in Table 1.

### Label Cost

For the labels prepared according to Examples 1 and 2 and Comparative Examples 1 to 4, production costs per one label were estimated based on the number of steps required for production and the type of the adhesive constituting the adhesive layer. They were evaluated in three rates of "○", "Δ", and "×" in ascending cost order. These results are shown in Table 1.

### Environmental Load

The labels prepared according to Examples 1 and 2 and Comparative Examples 1 to 4 were evaluated based on whether or not they use an organic solvent, a release paper, and an endocrine disruptor which are known to place heavy environmental loads. One using none of them was evaluated as "O", one using any one of them was evaluated as "Δ", and one using two or more of them was evaluated as "×" in environmental load. These results are shown in Table 1.

### Labeler Suitability

The labels prepared according to Examples 1 and 2 and Comparative Examples 1 to 4 were subjected to tests according to JIS K 7125, and static coefficients of friction of the labels at the adhesive layer surface were determined by calculation. One having the static coefficient of friction of less than 0.5 was evaluated as "○", one having the static coefficient of friction of 0.5 to 1.0 was evaluated as "Δ", and one having the static coefficient of friction of 1.0 or more was evaluated as "×" in labeler suitability. These results are shown in "Labeler Suitability" in Table 1.

[Table 1]

**TABLE 1**

| | Examples | | Comparative Examples | | | |
|---|---|---|---|---|---|---|
| | 1 | 2 | 1 | 2 | 3 | 4 |
| Low-temperature tack | ○ | ○ | ○ | ○ | ○ | ○ |
| Blocking resistance | ○ | ○ | × | Δ | ○ | - |
| Stability with time | ○ | ○ | × | × | ○ | ○ |
| Label cost | ○ | ○ | ○ to Δ | Δ to × | × | × |
| Environmental load | ○ | ○ | Δ | ○ | ○ | × |
| Labeler suitability | ○ | ○ | Δ | × | Δ | ○ |

[Table 2]

**TABLE 2**

| | Examples | | | | | | | Comparative Examples | | | | | | | | |
|---|---|---|---|---|---|---|---|---|---|---|---|---|---|---|---|---|
| | 1 | 2 | 3 | 4 | 5 | 6 | 7 | 5 | 6 | 7 | 8 | 9 | 10 | 11 | 12 | 13 |
| Low-temperature tack | 3.1 | 4.8 | 5.5 | 4.2 | 4.8 | 3.5 | 3.4 | 3.8 | 0 | 2.3 | 2.1 | 2.1 | 1.4 | 2.3 | 2.7 | 1.2 |
| [N/15 mm] | ○ | ○ | ○ | ○ | ○ | ○ | ○ | ○ | × | × | × | × | × | × | × | × |
| Blocking resistance | ○ | ○ | ○ | ○ | ○ | ○ | ○ | Δ | ○ | ○ | ○ | Δ | × | ○ | ○ | ○ |

## Claims

1. A label for battery packaging, comprising a heat shrinkable film, an adhesive layer and a printed layer, the adhesive layer and the printed layer each arranged on or above the heat shrinkable film,
wherein the adhesive layer includes an emulsive heat-sensitive adhesive containing:
an ethylene copolymer having an ethylene content of 66 to 84 percent by weight and a melting point of 60°C to 90°C; and
a tackifier having 10 to 30 percent by weight based on a total solid content of the emulsive heat-sensitive adhesive.

2. A label for battery packaging, according to claim 1,
wherein the heat shrinkable film has a percentage of heat shrinkage in a main stretching direction of 10% or more as determined after being immersed in a glycerol bath at 110°C for five seconds.

3. A label for battery packaging, according to one of claims 1 and 2,
wherein the heat shrinkable film further has a percentage of heat shrinkage in the main stretching direction of 10% or less as determined after being immersed in a glycerol bath at 90°C for five seconds and a percentage of heat shrinkage in the main stretching direction of 30% or more as determined after being immersed in a glycerol bath at 140°C for five seconds.

4. A label for battery packaging, according to claim 1,
wherein the adhesive layer has an activation temperature lower than a shrinkage starting temperature of the heat shrinkable film by 10°C or more.

5. A label for battery packaging, according to claim 1,
wherein the ethylene copolymer is an ethylene-vinyl acetate copolymer having a melt flow rate (MFR) of 150 to 450 g/10 minutes.
